# EUROPÄISCHE PATENTSCHRIFT

(11) **EP 2 896 839 B1**
(45) Veröffentlichungstag und Bekanntmachung des Hinweises auf die Patenterteilung: **04.10.2017**
(21) Anmeldenummer: 14004053.6
(22) Anmeldetag: 02.12.2014
(51) Int. Cl.: F15B 1/02, E02F 9/22, B60G 17/005

(54) **Vorrichtung zum Sperren und zum Druckanpassen**
Device for locking and pressure adjustment
Dispositif de blocage et d'adaptation de pression

(30) Priorität: 14.01.2014 DE 102014000695
(43) Veröffentlichungstag der Anmeldung: 22.07.2015
(73) Patentinhaber: Hydac System GmbH, 66280 Sulzbach/Saar (DE)
(72) Erfinder: Huth, Heinz-Peter, 66802 Überherm (DE)
(74) Vertreter: Bartels & Partner

(56) Entgegenhaltungen:
- EP-A1- 0 381 788
- EP-A2- 1 659 087
- DE-A1-102008 057 723
- JP-A- 2006 045 852

## Beschreibung

Die Erfindung betrifft eine Vorrichtung zum Sperren und zum Druckanpassen, insbesondere vorgesehen für den Einsatz bei einer fahrbaren Arbeitsmaschine mit mindestens einer hydraulischen Aktuatoreinrichtung und einer Speichereinrichtung, mit den Merkmalen im Oberbegriff von Anspruch 1.

Derartige Vorrichtungen werden regelmäßig bei fahrbaren Arbeitsmaschinen, wie Baumaschinen, insbesondere bei Radladern eingesetzt. Diese Arbeitsmaschinen umfassen u.a. eine Aktuatoreinrichtung für ein Hubwerk mit mindestens einer Kolben-Zylinder-Einheit zum Anheben und Absenken einer Ladeschaufel dieses Hubwerkes. Diese Ladeschaufel ist im laufenden Betrieb der Arbeitsmaschine unterschiedlichen statischen und dynamischen Belastungen ausgesetzt, die von der Aktuatoreinrichtung beherrscht werden müssen. So wird z.B. zum Aufnehmen einer Nutzlast, die dann als Hubzylinder fungierende Kolben-Zylinder-Einheit in der Regel gesperrt, um die volle Kraft der Arbeitsmaschine zum Aufnehmen der Nutzlast einsetzen zu können. Während der Fahrt mit angehobener Nutzlast soll jedoch die Aktuatoreinrichtung die Funktion einer Feder-Dämpfer-Einheit übernehmen, um zu verhindern, dass sich die nach Möglichkeit in einer konstanten Lage zu haltende Nutzlast ungewollt aufschwingt. Darüber hinaus soll keine Überlastung des Hubwerks im Betrieb auftreten.

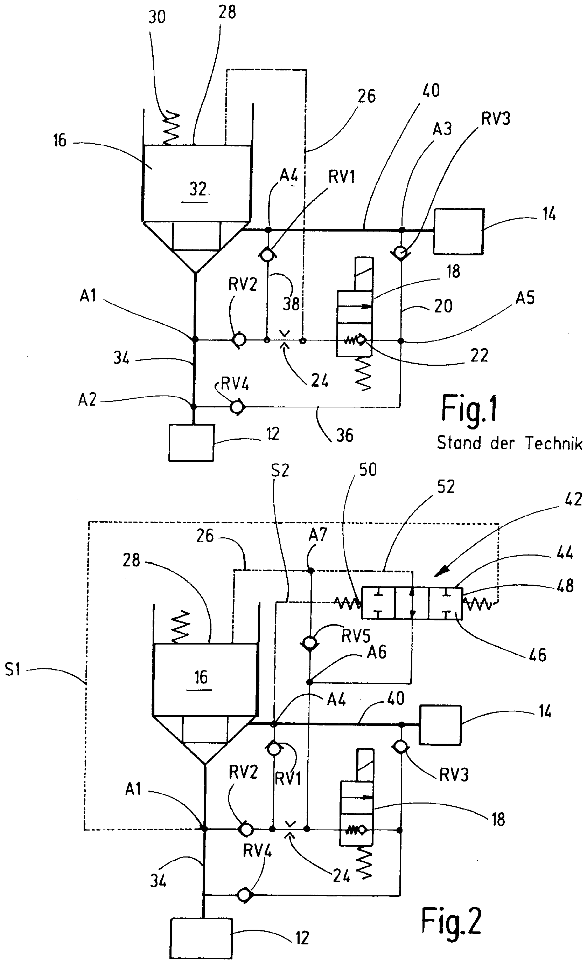

Im Stand der Technik, vgl. Fig. 1, ist eine gattungsgemäße Vorrichtung zum Sperren und zum Druckanpassen bekannt, insbesondere vorgesehen für den Einsatz bei einer fahrbaren Arbeitsmaschine mit mindestens einer hydraulischen Aktuatoreinrichtung und einer Speichereinrichtung, die mittels einer ersten Ventileinrichtung fluidführend miteinander verbindbar oder voneinander trennbar sind, wobei vor dem Herstellen der fluidführenden Verbindung durch die erste Ventileinrichtung ein kontrollierter Druckausgleich zwischen der Aktuatoreinrichtung und der Speichereinrichtung über eine Ausgleichseinrichtung zur Vermeidung eines schlagartigen Druckausgleiches veranlasst ist, wobei eine weitere zweite Ventileinrichtung in eine Bypass-Leitung unter Umgehung der ersten Ventileinrichtung geschaltet ist, die zumindest in einer Durchflussrichtung die Speichereinrichtung mit der Aktuatoreinrichtung verbindet, und wobei in die Bypass-Leitung zwischen der zweiten Ventileinrichtung und der Ausgleichseinrichtung in Form einer Durchfluss-Regeleinrichtung, insbesondere in Form einer Blende oder einer Drossel oder eines Stromregelventiles, eine Steuerleitung mündet, mittels der die erste Ventileinrichtung ansteuerbar ist.

Weitere Vorrichtungen zum Sperren und Druckanpassen gehen aus der EP 1 659 087 A2, der EP 0 381 788 A1, der JP 2006-045852 und der DE 10 2008 057 723 A1 hervor.

Vor diesem Hintergrund ist es Aufgabe der Erfindung, eine Vorrichtung zum Sperren und zum Druckanpassen für eine hydraulisch ansteuerbare Aktuatoreinrichtung aufzuzeigen, die in einer Steuerstellung zur Aufnahme der Nutzlast sicher sperrbar ist und in dieser oder einer weiteren Steuerstellung eine wirksame Feder-Dämpfer-Charakteristik aufweist.

Diese Aufgabe wird durch eine Vorrichtung zum Sperren und zum Druckanpassen mit den Merkmalen von Anspruch 1 gelöst. Vorteilhafte Ausführungsformen der Vorrichtung gehen aus den Unteransprüchen 2 bis 6 hervor.

Gemäß dem kennzeichnenden Teil des Patentanspruches 1 ist vorgesehen, dass eine weitere Ausgleichseinrichtung zudem aus einer dritten Ventileinrichtung gebildet ist, deren Ventilkolben auf einander gegenüberliegenden Seiten von einem Steuerdruck beaufschlagbar ist, der dem jeweils herrschenden Druck in zwei Verbindungsleitungen entspricht, wovon die erste Verbindungsleitung zwischen der Aktuatoreinrichtung und der ersten Ventileinrichtung und die zweite Verbindungsleitung zwischen der ersten Ventileinrichtung und der Speichereinrichtung verläuft, und dass die dritte Ventileinrichtung insbesondere ein 2/3-Wegeventil ist mit zwei Sperrstellungen und einer dazwischenliegenden geöffneten Stellung, die eine fluidführende Verbindung für eine zweite Bypass-Leitung herstellt, die vor und hinter der dritten Ventileinrichtung an die Steuerleitung für die erste Ventileinrichtung angeschlossen ist.

Dadurch dass erfindungsgemäß die weitere Ausgleichseinrichtung aus einer dritten Ventileinrichtung gebildet ist, deren Ventilkolben auf einander gegenüberliegenden Seiten von einem Steuerdruck beaufschlagbar ist, der dem jeweils herrschenden Druck in den beiden Verbindungsleitungen entspricht, ist sichergestellt, dass erst nach einem erfolgten Druckausgleich zwischen Aktuator- und Speichereinrichtung mittels der zweiten Ventileinrichtung die dritte Ventileinrichtung in eine geöffnete Position gelangt, bei der die angesprochene Steuerfläche der ersten Ventileinrichtung entlastet, mithin also auf dem niedrigsten Druck angelangt ist, bei der die Hauptstufe der ersten Ventileinrichtung öffnet und insoweit für einen Federdämpfungsmodus die Speichereinrichtung mit der Aktuatoreinrichtung fluidführend in permanenter Weise verbindet.

Es ist ferner vorgesehen, dass vor dem Herstellen der fluidführenden Verbindung durch die erste Ventileinrichtung ein kontrollierter Druckausgleich zwischen der Aktuatoreinrichtung und der Speichereinrichtung über eine Ausgleichseinrichtung zur Vermeidung eines schlagartigen Druckausgleiches veranlasst ist.

Diese Lösung hat den Vorteil, dass beim Umschalten der Vorrichtung aus ihrer Sperrstellung, beispielsweise zwecks Aufnahme einer Nutzlast, in den späteren Feder-Dämpfer-Modus beim Verfahren der Arbeitsmaschine jedenfalls unabhängig davon, ob in der Aktuatoreinrichtung der höhere Druck herrscht oder in der Speichereinrichtung, vorab das dahingehend unterschiedliche Druckniveau zwischen den Einrichtungen ausgeglichen wird, so dass jedenfalls mit Betätigen oder Öffnen der ersten Ventileinrichtung bereits ein kontrollierter Druckausgleich zwischen der Aktuatoreinrichtung und der Speichereinrichtung vorliegt, so dass der im Stand der Technik aufgezeigte schlagartige Druckausgleich zwischen diesen Einrichtungen mit Sicherheit vermieden ist. Dies hat so keine Entsprechung im Stand der Technik.

Die erfindungsgemäße Vorrichtung zum Sperren und zum Druckanpassen kann dem Grunde nach für jede Art von Fahrzeug eingesetzt werden, bei dem neben der gewünschten Feder-Dämpfung diese in sperrender Weise auch weggeschaltet werden soll. Auch sind weitere Anwendungen der erfindungsgemäßen Lösung möglich, bei denen unterschiedliche Druckniveaus druckschlagfrei auszugleichen sind. Neben dem Einsatz für Achsfederungen kann die erfindungsgemäße Lösung auch für Hubwerke ganz allgemein eingesetzt werden.

Sofern Aktuatoreinrichtungen zum Einsatz kommen, bestehen diese regelmäßig aus hydraulischen Kolben-Zylinder-Einheiten, deren Kolben-Stangen-Anordnung innerhalb des Zylindergehäuses einen Kolbenarbeitsraum von einem Stangenarbeitsraum trennt. Sofern also von einer fluidführenden Verbindung zwischen der Aktuatoreinrichtung und der Speichereinrichtung die Rede ist, die auch getrennt werden kann, meint dies letztendlich, dass mindestens einer der genannten Arbeitsräume über die erste Ventileinrichtung mit der Speichereinrichtung in wieder trennender Weise verbindbar ist. Des Weiteren kann anstelle der Kolben-Zylinder-Einheiten als Aktuatoreinrichtung auch ein Hydromotor oder eine vergleichbare Betätigungseinrichtung treten.

Durch die erfindungsgemäße weitere Ausgleichseinrichtung wird ein etwaiger Druckunterschied zwischen der Aktuatoreinrichtung und der Speichereinrichtung zunächst über eine weitere, vorzugsweise gedrosselte Fluidverbindung so weit abgebaut, bis die erste Ventileinrichtung auf einem Druckniveau geöffnet werden kann, bei dem bereits Aktuator- und Speichereinrichtung auf demselben Druckniveau liegen, so dass ruckartige, unkontrollierte Bewegungen auf die Fahrachse der jeweiligen Arbeitsmaschine wirksam verhindert werden können und das gewünschte Feder-Dämpfungsverhalten sich unmittelbar ruckfrei einstellt. Die Arbeitsmaschine bleibt daher diesbezüglich stets verlässlich durch eine Bedienperson kontrollierbar. Es ist hierfür vorgesehen, dass eine weitere zweite Ventileinrichtung in eine Bypass-Leitung unter Umgehung der ersten Ventileinrichtung geschaltet ist, die zumindest in einer Durchflusseinrichtung die Aktuatoreinrichtung mit der Speichereinrichtung verbindet.

Da in die Bypass-Leitung zwischen der zweiten Ventileinrichtung und der Ausgleichseinrichtung in Form einer Durchfluss-Regeleinrichtung, insbesondere in Form einer Blende oder einer Drossel oder eines Stromregelventiles, eine Steuerleitung mündet, mittels der die erste Ventileinrichtung ansteuerbar ist, lässt sich immer jeweils der höchste Druck im angesprochenen hydraulischen System zum Schließen der ersten Ventileinrichtung nutzen und der jeweils geringste Druck in der Steuerleitung aufbauen zwecks Öffnen der ersten Ventileinrichtung zum Herbeiführen des Feder-Dämpfungsverhaltens der Vorrichtung.

Vorzugsweise ist hierfür vorgesehen, dass in die Bypass-Leitung vor und hinter der zweiten Ventileinrichtung jeweils ein Rückschlagventil geschaltet ist, deren jeweilige Öffnungsrichtung zur Speichereinrichtung weist. Ferner ist in eine erste Verbindungsleitung zwischen dem Aktuator und der ersten Ventileinrichtung und zumindest teilweise parallel zur ersten Bypass-Leitung verlaufend eine weitere dritte Bypass-Leitung vorhanden, die ein Rückschlagventil aufweist, dessen Öffnungsrichtung entgegengesetzt zu der jeweiligen Öffnungsrichtung der Rückschlagventile in der ersten Bypass-Leitung ist.

Zwischen dem einen Rückschlagventil, das über die erste Bypass-Leitung benachbart an die erste Verbindungsleitung angeschlossen ist und der Durchfluss-Regeleinrichtung mündet ein Abzweig in die erste Bypass-Leitung, der ein weiteres Rückschlagventil aufweist, das benachbart an einer weiteren zweiten Verbindungsleitung angeschlossen ist, die die fluidführende Verbindung von erster Ventileinrichtung zu der Speichereinrichtung herstellt, wobei die Öffnungsrichtung dieses Rückschlagventiles von der zweiten Verbindungsleitung abgewandt ist.

Mittels der in der Art einer Graetzschaltung aufgebauten Rückschlagventilanordnung, wie vorstehend beschrieben, lässt sich über das erste Rückschlagventil in der ersten Bypass-Leitung und dem Rückschlagventil in dem Abzweig der jeweils im System herrschende höchste Druck auf die Steuerfläche der ersten Ventileinrichtung melden, wobei aufgrund dieses höchsten Druckes die erste Ventileinrichtung in der geschlossenen Position verbleibt. Wird die zweite Ventileinrichtung, der eine Art Vorsteuerfunktion zukommt, geschaltet und mithin in die fluidführende Durchlassstellung gebracht, wird die Steuerfläche der ersten Ventileinrichtung über die Steuerleitung und über das zweite Rückschlagventil der ersten Bypass-Leitung sowie das Rückschlagventil in der weiteren dritten Bypass-Leitung mit dem niedrigsten Systemdruck verbunden, was zum Öffnen der ersten Ventileinrichtung führt.

Sofern die erfindungsgemäße Lösung bei einer Arbeitsmaschine wie einem Radlader zum Einsatz kommen sollte, sieht die Anwendung beispielsweise wie folgt aus:
1. Radlader nimmt Last auf, was vorzugsweise bei gesperrter Achsfederung erfolgt.
2. Radlader fährt zum Entladen und die Achsfederung wird vor oder beim Fahren entsperrt.

Weitere vorteilhafte Merkmalsausgestaltungen sind Gegenstand der Unteransprüche.

Im Folgenden wird die erfindungsgemäße Lösung anhand eines Ausführungsbeispieles nach der Zeichnung näher erläutert. Dabei zeigen in prinzipieller und nicht maßstäblicher Darstellung in der Art von üblichen hydraulischen Blockschaltbildern:
- Fig. 1: eine im Stand der Technik nachweisbare Vorrichtungslösung; und
- Fig. 2: die demgegenüber erfindungsgemäß verbesserte Vorrichtung zum Sperren und zum Druckanpassen.

Zum besseren Verständnis und um die erfindungsgemäße Lösung einzuführen wird zunächst der Stand der Technik nach der Fig. 1 näher erläutert. Die Fig. 1 zeigt eine Vorrichtungslösung, insbesondere wie sie bisher vorgesehen ist für den Einsatz bei einer fahrbaren Arbeitsmaschine. Die Vorrichtung weist insbesondere eine hydraulische Aktuatoreinrichtung 12 sowie eine Speichereinrichtung 14 auf, die mittels einer ersten Ventileinrichtung 16 fluidführend miteinander verbindbar oder voneinander trennbar sind. Der Einfachheit halber ist die Aktuatoreinrichtung 12 sowie die Speichereinrichtung 14 in der Art einer Blackbox dargestellt.

Bei der Aktuatoreinrichtung 12 kann es sich insbesondere um einen üblichen hydraulischen Arbeitszylinder handeln, dessen Kolben-Stangen-Einheit einen Kolbenarbeitsraum von einem Stangenarbeitsraum fluidführend trennt. Insbesondere soll ein fluidführender Anschluss auf Seiten des Kolbenarbeitsraumes des nicht näher dargestellten Arbeitszylinders veranlasst sein. Anstelle eines einzelnen hydraulischen Arbeitszylinders können auch für die Bildung der Aktuatoreinrichtung 12 mehrere miteinander entsprechend verschaltete Arbeitszylinder (nicht dargestellt) dienen. Zusätzlich oder alternativ zu den genannten hydraulischen Arbeitszylindern kann die Aktuatoreinrichtung 12 zum Ansteuern einer nicht näher dargestellten hydraulischen Arbeitsgerätschaft der Arbeitsmaschine auch einen Hydromotor oder mehrere solche Hydromotoren umfassen. Die Speichereinrichtung 14, wiederum gleichfalls als Blackbox dargestellt, besteht aus hierfür üblichen Hydrospeichern, beispielsweise in Form von Kolbenspeichern. Die Speichereinrichtung 14 kann einen einzelnen Hydrospeicher; aber auch mehrere Hydrospeicher (nicht dargestellt) umfassen. Insbesondere trennt der Kolben oder ein sonstiges Trennelement des Hydrospeichers eine vorspannbare Gasseite von einer Fluidseite des Speichers, mit dem dieser an die hydraulische Vorrichtung nach der Fig. 1 wie dargestellt angeschlossen ist.

Des Weiteren ist eine zweite Ventileinrichtung 18 vorhanden, die in eine Bypass-Leitung 20 unter Umgehung der ersten Ventileinrichtung 16 geschaltet ist und die zumindest in Durchflussrichtung die Speichereinrichtung 14 mit der Aktuatoreinrichtung 12 verbindet. Die zweite Ventileinrichtung 18 ist in üblicher Weise elektrisch ansteuerbar und in der Art eines 2/2-Wegeventiles, insbesondere Schaltventiles ausgebildet. Nimmt die zweite Ventileinrichtung 18 ihre in der Fig. 1 gezeigte Stellung ein unter dem Einfluss der gezeigten Rückstellfeder, ist insoweit die Funktion eines federbelasteten Rückschlagventils 22 realisiert, dessen Öffnungsrichtung in Richtung der Aktuatoreinrichtung 12 weist. Wird die zweite Ventileinrichtung 18 durch Bestromen betätigt, ist das dahingehende Schaltventil in seiner durchgehenden Öffnungsstellung, was durch den über dem Rückschlagventil 22 angeordneten Pfeil symbolisiert ist.

In die genannte Bypass-Leitung 20 ist zwischen der zweiten Ventileinrichtung 18 und einer Durchfluss-Regeleinrichtung 24 eine Steuerleitung 26 geschaltet, mittels deren Steuerdruck die erste Ventileinrichtung 16 ansteuerbar ist, wozu die Steuerleitung 26 auf die rückwärtige Steuerseite 28 der ersten Ventileinrichtung 16 ausmündet. In gleicher Wirkrichtung wie der Steuerdruck in der Steuerleitung 26 ist auf der rückwärtigen Steuerseite 28 der ersten Ventileinrichtung 16 eine Steuer- oder Druckfeder 30 angeordnet, die den Steuerkolben 32 der ersten Ventileinrichtung 16 in seiner Schließstellung zu halten sucht. Besonders bevorzugt ist die Durchfluss-Regeleinrichtung 24 wie dargestellt in Form einer Blende gebildet; es käme aber auch der Einsatz einer Drossel in Frage oder eines einschlägig einsetzbaren Stromregelventiles.

In die Bypass-Leitung 20 ist vor und hinter der zweiten Ventileinrichtung 18 jeweils ein Rückschlagventil RV2 und RV3 geschaltet, deren jeweilige Öffnungsrichtung zur Speichereinrichtung 14 weist. In eine erste Verbindungsleitung 34 zwischen der Aktuatoreinrichtung 12 und der ersten Ventileinrichtung 16 und zumindest parallel zur ersten Bypass-Leitung 20 verlaufend sowie in Blickrichtung auf die Fig. 1 gesehen unterhalb derselben angeordnet, ist eine weitere dritte Bypass-Leitung 36 vorhanden, die ein Rückschlagventil RV4 aufweist, dessen Öffnungsrichtung entgegengesetzt zu der jeweiligen Öffnungsrichtung der Rückschlagventile RV2 und RV3 in der ersten Bypass-Leitung 20 ist. In Blickrichtung auf die Fig. 1 ist dabei die Anschlussstelle A1 von erster Bypass-Leitung 20 in die erste Verbindungsleitung 34 benachbart der ersten Ventileinrichtung 16 angeordnet und die weitere Anschlussstelle A2, an der die dritte Bypass-Leitung 36 in die erste Verbindungleitung 34 mündet, ist unterhalb der Anschlussstelle A1 benachbart zu der Aktuatoreinrichtung 12 angeordnet.

Die bekannte Lösung nach der Fig. 1 ist ferner dadurch charakterisiert, dass zwischen dem einen Rückschlagventil RV2, das über die erste Bypass-Leitung 20 benachbart an die erste Verbindungsleitung 34 angeschlossen ist, und der Durchfluss-Regeleinrichtung ein Abzweig 38 in die erste Bypass-Leitung 20 einmündet, wobei der Abzweig 38 ein weiteres Rückschlagventil RV1 aufweist, das benachbart an eine weitere zweite Verbindungsleitung 40 angeschlossen ist, die eine permanent fluidführende Verbindung von erster Ventileinrichtung 16 zu der Speichereinrichtung 14 herstellt. Die Öffnungsrichtung dieses Rückschlagventiles RV1 ist von der zweiten Verbindungsleitung 40 abgewandt. Ferner mündet die erste Bypass-Leitung 20 nach dem Rückschlagventil RV3 über eine Anschlussstelle A3 in die zweite Verbindungsleitung 40 aus, die benachbart der Speichereinrichtung 14 gegenüberliegt. Der Abzweig 38 hingegen mit seinem Rückschlagventil RV1 mündet in die zweite Verbindungsleitung 40 an einer Anschlussstelle A4 aus, die der ersten Ventileinrichtung 16 benachbart gegenüberliegt.

Wird die in Fig. 1 aufgezeigte Federung, also die fluidführende Verbindung zwischen Speichereinrichtung 14 und Aktuatoreinrichtung 12 gesperrt, wobei die erste Ventileinrichtung 16 ihre in der Fig. 1 gezeigte Sperrstellung einnimmt und insoweit die erste Verbindungsleitung 34 von der zweiten Verbindungsleitung 40 trennt, kann durch eine Laständerung im Betrieb der Vorrichtung beispielsweise am Arbeitszylinder der Aktuatoreinrichtung 12 ein großer Druckunterschied zwischen der Aktuatoreinrichtung 12 und der Speichereinrichtung 14 entstehen. Beim Zuschalten der Speichereinrichtung 14 kann es dann ohne einen vorherigen Druckausgleich zwischen Aktuatoreinrichtung 12 und Speichereinrichtung 14 zu einem schlagartigen Druckausgleich zwischen den beiden genannten Einrichtungen 12, 14 kommen, was zu einer gefährlichen unkontrollierten Fahrachse bei der jeweiligen Arbeitsmaschine führen kann.

Bei der in Fig. 1 gezeigten Sperrstellung wird über das Rückschlagventil RV1 oder das Rückschlagventil RV2 der jeweils höchste Druck von Speichereinrichtung 14 bzw. Aktuatoreinrichtung 12 über die Steuerleitung 26 auf die rückwärtige Steuerseite oder Steuerfläche 28 der ersten Ventileinrichtung 16 gemeldet, und das Ventil 16 ist in seiner gezeigten geschlossenen Position gehalten. Bei geschalteter zweiter Ventileinrichtung 18, die insoweit eine Art Vorsteuerventil ausbildet, wird dieses Schaltventil 18 in seine durchgehend geöffnete Stellung gebracht, und die angesprochene Steuerseite 28 der ersten Ventileinrichtung 16 wird über das Rückschlagventil RV3 oder das Rückschlagventil RV4 dann mit dem jeweils niedrigsten Druck von Seiten der Speichereinrichtung 14 bzw. von Seiten der Aktuatoreinrichtung 12 verbunden. Auch wenn nun zwischen Aktuatoreinrichtung 12 und Speichereinrichtung 14 ein unterschiedliches Druckgefälle besteht, insbesondere eine Einrichtung einen höheren Druck aufweist als die andere Einrichtung, kommt es zu einem Öffnen der ersten Ventileinrichtung 16, was zu einer ungewollten, nicht beherrschbaren, gegebenenfalls ruckartigen Bewegung an der Aktuatoreinrichtung 12 in einer der beiden Betätigungsrichtungen führt, je nach Drucksituation an der Aktuatoreinrichtung 12 gegenüber dem Druckniveau der Speichereinrichtung 14. Über die Durchfluss-Regeleinrichtung 24 in Form der Blende, die in die erste Bypass-Leitung 20 zwischen Abzweig 38 und der Einmündungsstelle der Steuerleitung 26 geschaltet ist, erfolgt dann das Öffnen der ersten Ventileinrichtung 16 im Hinblick auf das hierfür notwendige, an der Blende entstehende erforderliche Druckgefälle.

Wie des Weiteren die Fig. 1 zeigt, mündet die dritte Bypass-Leitung 36 in die erste Bypass-Leitung 20 an einer Anschlussstelle A5 zwischen der zweiten Ventileinrichtung 18 und dem Rückschlagventil RV3. Während die zweite Ventileinrichtung 18 in der Art eines 2/2-Wege-Schaltventiles ausgebildet ist, ist die erste Ventileinrichtung 16 in der Art eines 2/2-Ventiles ausgebildet, das man fachsprachlich auch mit Logikventil bezeichnet. Solche Zweiwegeventile dienen regelmäßig dazu, zwei Anschlüsse zu steuern, hier in Form der ersten Verbindungsleitung 34 und der zweiten Verbindungsleitung 40, die in Abhängigkeit der Druckverhältnisse zwischen den Einrichtungen 12 und 14 einmal als Zuleitung und einmal als Ableitung dienen können.

Die erfindungsgemäße Lösung nach der Fig. 2 ist nunmehr vom grundsätzlichen Aufbau her wie die Lösung nach der Fig. 1 aufgebaut, weist jedoch darüber hinaus zusätzlich eine als Ganzes mit 42 bezeichnete Ausgleichseinrichtung auf. Was die sonstigen Komponenten anbelangt, wird auf die bisherige Beschreibung der Lösung im Stand der Technik Bezug genommen. Vor dem Herstellen der eigentlichen fluidführenden Verbindung durch die erste Ventileinrichtung 16 zwischen Aktuatoreinrichtung 12 und Speichereinrichtung 14 über die jeweils zuordenbaren Verbindungsleitungen 34 und 40 ist ein kontrollierter Druckausgleich zwischen den genannten Einrichtungen 12 und 14 über die Ausgleichseinrichtung 42 unter Vermeidung eines schlagartigen Druckausgleiches veranlasst. Hierfür weist die Ausgleichseinrichtung 42 eine dritte Ventileinrichtung 44 auf, deren Ventilkolben 46 auf einander gegenüberliegenden Seiten 48, 50 von einem Steuerdruck beaufschlagbar ist, der dem jeweils herrschenden Druck in den beiden Verbindungsleitungen 34 und 40 entspricht. Hierfür ist wiederum die eine Steuerseite 48 der dritten Ventileinrichtung 44 über eine Steuerleitung S1 an der Anschlussstelle A1 in die Verbindungsleitung 34 geschaltet, und die andere Steuerseite 50 über eine korrespondierend ausgebildete Steuerleitung S2 und über die Anschlussstelle A4 an die Verbindungsleitung 40 angeschlossen, die zur Speichereinrichtung 14 führt.

Gemäß der Darstellung nach der Fig. 2 wird in einer Ausgangsstellung der Ventilkolben 46 über gegenüberliegend an seinen Steuerseiten 48, 50 angreifende Druckfedern in einer Mittenstellung gehalten, bei der die Ventileinrichtung 44 in ihrer fluiddurchlassenden geöffneten Stellung gemäß der Darstellung nach der Fig. 2 ist. Die dritte Ventileinrichtung 44 ist in der Art eines 2/3-Wegeventiles oder Wege-Schaltventiles ausgebildet, das neben seiner gezeigten mittleren Durchlassstellung rechts und links davon mit fluidsperrenden Stellungen versehen ist. In der geöffneten gezeigten Stellung des dritten Ventils 44 wird eine fluidführende Verbindung für eine zweite Bypass-Leitung 52 hergestellt, die über Anschlussstellen A6 und A7 vor und hinter der dritten Ventileinrichtung 44 an die Steuerleitung 26 für die erste Ventileinrichtung 16 angeschlossen ist. Ferner ist zwischen den beiden aufgezeigten Anschlussstellen A6 und A7 ein weiteres Rückschlagventil RV5 geschaltet, dessen Öffnungsrichtung in Richtung der Anschlussstelle A7 weist.

Im Folgenden soll nun die Funktion der erfindungsgemäßen Lösung nach der Fig. 2 gegenüber dem Stand der Technik nach der Fig. 1 näher erläutert werden. Das Rückschlagventil RV5 und das 2/3-Wegeventil als dritte Ventileinrichtung 44 verhindern eine direkte Entlastung der Steuerfläche oder Steuerseite 28 des 2/2-Ventils 16 bei einem etwaig vorhandenen Druckgefälle zwischen Aktuatoreinrichtung 12 und Speichereinrichtung 14. Zunächst findet bei Betätigung des als Vorsteuerventil konzipierten zweiten Ventils 18 ein kontrollierter Druckausgleich über die Durchfluss-Regeleinrichtung 24 in Form der Blende statt. Da der jeweils höhere Druck von Aktuatoreinrichtung 12 oder Speichereinrichtung 14 über die Steuerleitungen S1 bzw. S2 auf den Ventilkolben 46 der dritten Ventileinrichtung 44 geleitet wird, befindet sich dieses jedenfalls in einer seiner beiden Sperrstellungen (linke oder rechte Sperrstellung). Bei geschalteter zweiter Ventileinrichtung 18 erfolgt bei einem höheren Druck in der Aktuatoreinrichtung 12 gegenüber der Speichereinrichtung 14 ein Druckausgleich über die erste Verbindungsleitung 34, das Rückschlagventil RV2, die Blende 24, die zweite Ventileinrichtung 18, das Rückschlagventil RV3 zu der zweiten Verbindungsleitung 40 mit der Speichereinrichtung 14. Im umgekehrten Fall wird der höhere Druck der Speichereinrichtung 14 unter Einbezug der genannten Leitungsstücke über das Rückschlagventil RV1, die Blende 24, die geschaltete zweite Ventileinrichtung 18 und über das weitere Rückschlagventil RV4 in der dritte Bypass-Leitung 36 zur Aktuatoreinrichtung 12 hin abgebaut.

Ist bei beiden Einrichtungen 12, 14 nunmehr über den beschriebenen Ausgleichsvorgang das Druckgefälle beseitigt und ein gleicher Steuerdruck vorhanden, geht das 2/3-Ventil 44 in seine in der Fig. 2 gezeigte Durchlassstellung, und während des Druckausgleichsvorganges zwischen den Einrichtungen 12, 14 wird dann aber jedenfalls der hinter der Blende 24 anstehende niedrigste Druck über die Steuerleitung 26 an die Steuerfläche oder Steuerseite 28 weitergeleitet mit der Folge, dass aufgrund des nivellierten Fluiddruckes in den Verbindungsleitungen 34 und 40 das 2/2-Ventil 16 entgegen der Wirkung der Druckfeder 30 hin öffnet und die fluidführende Verbindung zwischen den Einrichtungen 12, 14 herstellt zwecks Realisierung eines Feder-Dämpfungssystems in üblicher Weise.

Da mithin aufgrund der Druck-Ausgleichseinrichtung 42 ein Öffnen der ersten Ventileinrichtung 16 erst dann erfolgt, wenn das etwaig vorhandene Druckgefälle zwischen den Einrichtungen 12 und 14 wie dargelegt beseitigt ist, ist ein ruckfreier Öffnungsvorgang möglich, und der angesprochene kontrollierte Druckausgleich erreicht. Das zwischen die Anschlussstellen A6 und A7 eingesetzte Rückschlagventil RV5 trägt Sorge dafür, dass nicht ungewollt Fluid von der Anschlussstelle A7 in Richtung A6 strömen kann.

Mit der erfindungsgemäßen Vorrichtungslösung zum Sperren und zum Druckanpassen ist mithin ein kontrollierter Druckausgleich zwischen der Speichereinrichtung 14 und dem jeweiligen Aktuator im Rahmen der Aktuatoreinrichtung 12 vor Öffnen des großen Sperr- oder Steuerventiles 16 erreicht. Die angesprochene erfindungsgemäße Lösung kommt ohne zusätzliche Magnetventile oder Proportionalventile aus, was die Lösung besonders kostengünstig in der Realisierung macht. Gefährliche Fahrzustände mit der Arbeitsmaschine sind durch die anspruchsgemäße Vorrichtung jedenfalls mit Sicherheit vermieden.

## Patentansprüche

1. Vorrichtung zum Sperren und zum Druckanpassen, insbesondere vorgesehen für den Einsatz bei einer fahrbaren Arbeitsmaschine mit mindestens einer hydraulischen Aktuatoreinrichtung (12) und einer Speichereinrichtung (14), die mittels einer ersten Ventileinrichtung (16) fluidführend miteinander verbindbar oder voneinander trennbar sind, wobei vor dem Herstellen der fluidführenden Verbindung durch die erste Ventileinrichtung (16) ein kontrollierter Druckausgleich zwischen der Aktuatoreinrichtung (12) und der Speichereinrichtung (14) über eine Ausgleichseinrichtung (24) zur Vermeidung eines schlagartigen Druckausgleiches veranlasst ist, wobei eine weitere zweite Ventileinrichtung (18) in eine Bypass-Leitung (20) unter Umgehung der ersten Ventileinrichtung (16) geschaltet ist, die zumindest in einer Durchflussrichtung die Speichereinrichtung (14) mit der Aktuatoreinrichtung (12) verbindet, und wobei in die Bypass-Leitung (20) zwischen der zweiten Ventileinrichtung (18) und der Ausgleichseinrichtung (24) in Form einer Durchfluss-Regeleinrichtung, insbesondere in Form einer Blende oder einer Drossel oder eines Stromregelventiles, eine Steuerleitung (26) mündet, mittels der die erste Ventileinrichtung (16) ansteuerbar ist, **dadurch gekennzeichnet, dass** eine weitere Ausgleichseinrichtung (42) zudem aus einer dritten Ventileinrichtung (44) gebildet ist, deren Ventilkolben (46) auf einander gegenüberliegenden Seiten (48, 50) von einem Steuerdruck beaufschlagbar ist, der dem jeweils herrschenden Druck in zwei Verbindungsleitungen (34, 40) entspricht, wovon die erste Verbindungsleitung (34) zwischen der Aktuatoreinrichtung (12) und der ersten Ventileinrichtung (16) und die zweite Verbindungsleitung (40) zwischen der ersten Ventileinrichtung (16) und der Speichereinrichtung (14) verläuft, und dass die dritte Ventileinrichtung (44) insbesondere ein 2/3-Wegeventil ist mit zwei Sperrstellungen und einer dazwischenliegenden geöffneten Stellung, die eine fluidführende Verbindung für eine zweite Bypass-Leitung (52) herstellt, die vor (A6) und hinter (A7) der dritten Ventileinrichtung (44) an die Steuerleitung (26) für die erste Ventileinrichtung (16) angeschlossen ist.

2. Vorrichtung nach Anspruch 1, **dadurch gekennzeichnet, dass** in die Bypass-Leitung (20) vor und hinter der zweiten Ventileinrichtung (18) jeweils ein Rückschlagventil (RV2 und RV3) geschaltet ist, deren jeweilige Öffnungsrichtung zur Speichereinrichtung (14) weist.

3. Vorrichtung nach Anspruch 2, **dadurch gekennzeichnet, dass** in die erste Verbindungsleitung (34) zwischen der Aktuatoreinrichtung (12) und der ersten Ventileinrichtung (16) und zumindest teilweise parallel zur ersten Bypass-Leitung (20) verlaufend eine weitere dritte Bypass-Leitung (36) vorhanden ist, die ein Rückschlagventil (RV4) aufweist, dessen Öffnungsrichtung entgegengesetzt zu der jeweiligen Öffnungsrichtung der Rückschlagventile (RV2 und RV3) in der ersten Bypass-Leitung (20) ist.

4. Vorrichtung nach Anspruch 2 oder 3, **dadurch gekennzeichnet, dass** zwischen dem einen Rückschlagventil (RV2), das über die erste Bypass-Leitung (20) benachbart an die erste Verbindungsleitung (34) angeschlossen ist und der Durchfluss-Regeleinrichtung (24) ein Abzweig (38) in die erste Bypass-Leitung (20) einmündet, der ein weiteres Rückschlagventil (RV1) aufweist, das benachbart an der weiteren zweiten Verbindungsleitung (40) angeschlossen ist, und dass die Öffnungsrichtung dieses Rückschlagventiles (RV1) von der zweiten Verbindungsleitung (40) abgewandt ist.

5. Vorrichtung nach einem der vorstehenden Ansprüche, **dadurch gekennzeichnet, dass** in die Steuerleitung (26) für die erste Ventileinrichtung (16) zwischen den Anschlussstellen (A6 und A7) der zweiten Bypass-Leitung (52) ein weiteres Rückschlagventil (RV5) geschaltet ist, dessen Öffnungsrichtung zur ersten Ventileinrichtung (16) weist.

6. Vorrichtung nach einem der vorstehenden Ansprüche, **dadurch gekennzeichnet, dass**, wenn die zweite Ventileinrichtung (18) in ihrer die fluidführende Verbindung zwischen Aktuatoreinrichtung (12) und Speichereinrichtung (14) in der ersten Bypass-Leitung (20) sperrenden Stellung ist, die dritte Ventileinrichtung (44) ihre geöffnete Durchlassstellung einnehmen kann.

## Claims

1. An apparatus for blocking and for pressure adjustment, provided in particular for use in a driveable work machine comprising at least one hydraulic actuator device (12) and one storage device (14) which can be connected to one another such as to convey fluid or can be separated from one another by means of a first valve device (16), before establishing the fluid-conveying connection by means of the first valve device (16), controlled pressure equalisation between the actuator device (12) and the storage device (14) being brought about by means of an equalising device (24) in order to prevent abrupt pressure equalisation, an additional second valve device (18) being connected in a bypass line (2), bypassing the first valve device (16) which connects the storage device (14) to the actuator device (12), at least in one direction of flow, and a control line (26) discharging into the bypass line (20) between the second valve device (18) and the equalisation device (24) in the form of a flow regulating device, in particular in the form of an aperture or a throttle or a flow control valve, by means of which control line the first valve device (16) can be actuated, **characterised in that** a further equalisation device (42) is additionally formed from a third valve device (44), to the valve piston (46) of which control pressure can be applied on opposite sides (48, 50), which control pressure corresponds to the respectively prevailing pressure in two connection lines (34, 40), the first connection line (34) of which runs between the actuator device (12) and the first valve device (16), and the second connection line (40) of which runs between the first valve device (16) and the storage device (14), and that the third valve device (44) is in particular a 2/3-way valve with two blocking positions and an open position lying in between which establishes a fluid-conveying connection for a second bypass line (52) which is connected to the control line (26) for the first valve device (16) in front of (A6) and behind (A7) the third valve device (44).

2. The apparatus according to Claim 1, **characterised in that** a check valve (RV2 and RV3) is respectively connected in the bypass line (20) in front of and behind the second valve device (18), the respective opening direction of which points towards the storage device (14).

3. The apparatus according to Claim 2, **characterised in that** a further third bypass line (36) is provided in the first connection line (34) between the actuator device (12) and the first valve device (16) and running at least partially parallel to the first bypass line (20), which third bypass line has a check valve (RV4) of which the direction of opening runs in the opposite direction to the respective direction of opening of the check valves (RV2 and RV3) in the first bypass line (20).

4. The apparatus according to Claim 2 or 3, **characterised in that** a branch (38) discharges into the first bypass line (20) between the one check valve (RV2) that is connected via the first bypass line (20) adjacent to the first connection line (34) and the flow regulating device (24), which branch has a further check valve (RV1) that is connected adjacent to the further second connection line (40), and that the direction of opening of this check valve (RV1) is turned away from the second connection line (40).

5. The apparatus according to any of the preceding claims, **characterised in that** a further check valve (RV5) is connected in the control line (26) for the first valve device (16) between the connection points (A6 and A7) of the second bypass line (52), the direction of opening of the further check valve (RV5) pointing towards the first valve device (16).

6. The apparatus according to any of the preceding claims, **characterised in that** when the second valve device (18) is in its position that blocks the fluid-conveying connection between the actuator device (12) and the storage device (14) in the first bypass line (20), the third valve device (44) can adopt its open flow position.

## Revendications

1. Système de blocage et d'adaptation de la pression prévu notamment pour être utilisé dans une machine itinérante fournissant du travail, comprenant au moins un dispositif (12) d'actionneur hydraulique et un dispositif (14) d'accumulation, qui peuvent, au moyen d'un premier dispositif (16) de soupape, communiquer fluidiquement ou être séparés l'un de l'autre, dans lequel, avant de ménager la communication fluidique, il est provoqué, par le premier dispositif (16) de soupape, une compensation de pression contrôlée entre le dispositif (12) d'actionneur et le dispositif (14) d'accumulation, par un dispositif (24) de compensation, pour empêcher une compensation de la pression par à coups, un autre deuxième dispositif (18) de soupape étant monté dans un conduit (20) de dérivation, en contournant le premier dispositif (16) de soupape et mettant, au moins dans un sens de passage, le dispositif (14) d'accumulation en communication avec le dispositif (12) d'actionneur et dans lequel, dans le conduit (20) de dérivation, débouche, entre le deuxième dispositif (18) de soupape et le dispositif (24) de compensation, sous la forme d'un dispositif de régulation du débit, notamment sous la forme d'un diaphragme ou d'un étranglement ou d'une soupape de régulation du courant, un conduit (26) de commande au moyen duquel le premier dispositif (16) de soupape peut être commandé, **caractérisé en ce qu'**il est formé en outre un autre dispositif (42) de compensation constitué d'un troisième dispositif (44) de soupape, dont le piston (46) de soupape peut être soumis, sur des côtés (48, 50) opposés, à une pression de commande correspondant à la pression régnant dans deux conduits (34, 40) de liaison, dont le premier conduit (34) s'étend entre le dispositif (12) d'actionneur et le premier dispositif (16) de soupape, et le deuxième conduit (40) entre le premier dispositif (16) de soupape et le dispositif (14) d'accumulation, et **en ce que** le troisième dispositif (44) de soupape est notamment une soupape à 2/3 voies ayant deux positions de blocage et une position d'ouverture intermédiaire, qui ménagent une liaison fluidique pour un deuxième conduit (52) de dérivation, qui est raccordé avant (A6) et après (A7) le troisième dispositif (44) de soupape au conduit (26) de commande pour le premier dispositif (16) de soupape.

2. Système suivant la revendication 1, **caractérisé en ce que**, dans le conduit (20) de dérivation, avant et après le deuxième dispositif (18) de soupape, est monté respectivement un clapet (RV2, RV3) anti-retour, dont le sens d'ouverture respectif est tourné vers le dispositif (14) d'accumulation.

3. Système suivant la revendication 2, **caractérisé en ce que**, dans le premier conduit (34) de liaison, il y a, entre le dispositif (12) d'actionneur et le premier dispositif (16) de soupape et en s'étendant au moins en partie parallèlement au premier conduit (20) de dérivation, un autre troisième conduit (36) de dérivation, qui a un clapet (RV4) anti-retour, dont le sens d'ouverture est opposé au sens d'ouverture des clapets (RV2 et RV3) anti-retour dans le premier conduit (20) de dérivation.

4. Système suivant la revendication 2 ou 3, **caractérisé en ce que** le clapet (RV2) anti-retour, qui a un premier conduit (20) de dérivation, est raccordé, au voisinage du premier conduit (34) de liaison, et le dispositif (24) de régulation du débit, débouche, dans le premier conduit (20) de dérivation, une bifurcation (38), qui a un autre clapet (RV1) anti-retour, raccordée au voisinage de l'autre deuxième conduit (40) de liaison, et **en ce que** le sens d'ouverture de ce clapet (RV1) anti-retour est détourné du deuxième conduit (40) de liaison.

5. Système suivant l'une des revendications précédentes, **caractérisé en ce que**, dans le conduit (26) de commande du premier dispositif (16) de vanne, est monté, entre les points (A6 et A7) de raccord du deuxième conduit (52) de dérivation, un autre clapet (RV5) anti-retour, dont le sens d'ouverture est tourné vers le premier dispositif (16) de soupape.

6. Système suivant l'une des revendications précédentes, **caractérisé en ce que**, lorsque le deuxième dispositif (18) de soupape est dans sa position bloquant la liaison entre le dispositif (12) d'actionneur et le dispositif (14) d'accumulation dans le premier conduit (20) de dérivation, le troisième dispositif (44) de soupape peut prendre sa position de passage ouverte.
